# EUROPEAN PATENT SPECIFICATION

(11) **EP 4 212 365 B1**
(45) Date of publication and mention of the grant of the patent: **26.02.2025**
(21) Application number: 21866346.6
(22) Date of filing: 07.07.2021
(51) Int. Cl.: B60C 27/06, B60C 27/02, F16B 7/22, F16B 7/04, F16B 2/10, F16B 2/08, B60C 27/10

(54) **CONNECTION MECHANISM FOR TIRE SLIP PREVENTION DEVICE**
VERBINDUNGSMECHANISMUS FÜR EINE VORRICHTUNG ZUR VERHINDERUNG VON REIFENSCHLUPF
MÉCANISME DE LIAISON POUR UN DISPOSITIF DE PRÉVENTION DE RIPAGE DE PNEU

(30) Priority: 11.09.2020 JP 2020153193
(43) Date of publication of application: 19.07.2023
(73) Proprietor: Car Mate Mfg.co., Ltd., Tokyo 171-0051 (JP)
(72) Inventor: TANABE, Shigeru, Tokyo 171-0051 (JP)
(74) Representative: Lambacher, Michael
(86) International application number: PCT/JP2021/025686
(87) International publication number: WO 2022/054386

(56) References cited:
- EP-A1- 0 993 970
- EP-A1- 1 180 439
- WO-A1-2010/084557
- JP-A- 2010 167 980
- JP-A- H07 257 121
- JP-A- H07 257 121
- JP-A- H08 282 225
- JP-A- H08 282 225
- JP-U- S58 146 703
- JP-U- S58 146 703

## Description

### Technical Field

The present invention relates to a tire slip prevention device, in particular, a wire connection mechanism for use in a tire slip prevention device.

### Background Art

Various mechanisms for connecting the wire of a tire slip prevention device have been considered, and for example, those disclosed in Patent Literatures 1 to 3 are known. The connection mechanism disclosed in Patent Literature 1 has, on one end of the wire, a flange having a projection surface greater than the diameter of the wire and, on the other end of the wire, a receiving portion into which the flange can be inserted. After the flange is inserted into the receiving portion, the flange is rotated in the circumferential direction of the wire to prevent them from becoming disconnected.

The connection mechanism disclosed in Patent Literature 2 has, on one end of the wire, a connecting head portion having a projection surface greater than the diameter of the wire and, on the other end of the wire, a coupling member capable of accommodating the connecting head portion. The coupling member has an opening into which the connecting head portion is inserted, and an abutting member that secures the connecting head portion. The opening is composed of an insertion hole into which the connecting head portion can be inserted, and a notch that communicates with the insertion hole and into which the wire or only a constricted portion of the rear end of the connecting head portion can be inserted. The abutting member is a lever that presses the connecting head portion inserted into the coupling member from the insertion hole toward the notch.

Similarly to the connection mechanisms disclosed in Patent Literatures 1 and 2, the connection mechanism disclosed in Patent Literature 3 has a connecting head portion on one end of the wire and a coupling member on the other end of the wire. The connection mechanism disclosed in Patent Literature 3 includes a lever provided in the coupling member, the lever having a groove through which the wire passes on the front end (pawl) of the lever, and being capable of abutting the pawl against the rear end (narrow part) of the connecting head portion inserted into the coupling member. Patent Literature 4 discloses a release system for an anti-skid device comprising a closing device. The closing device comprises a hollow body with two opposite openings in longitudinal direction and designed for receiving free ends of a wire of the anti-skid device; the body is further designed to receive two levers arranged to pivot about a pin; each lever has at one end a tooth designed to engage in a groove formed in a connecting head portion arranged on one end of the wire. From Patent Literature 5 a connection mechanism for connecting a wire of a tire slip prevention device is known, which comprises a box-like female connecting member having engagement holes and a male connecting member having corresponding projections designed to be releasably inserted into the engagement holes. Further, Patent Literature 6 describes a connection mechanism for a tire slip prevention device comprising a connecting head portion with a groove on one end of the wire and a coupling member having two pivoting levers at the other end of the wire. Each of the levers has at one end a projection designed for being inserted into the groove of the connecting head portion. Further, from Patent Literature 7 a connecting mechanism is known comprising a connecting head portion on one end of the wire and a coupling member having one lever on the other end of the wire. Still further, from Patent Literature 8 a connection mechanism is known comprising a single lever designed for fixing a connecting head portion within a housing.

### Citation List

### Patent Literature

Patent Literature 1: Japanese Unexamined Patent Publication No. S63-74705
Patent Literature 2: Japanese Patent No. 5383221
Patent Literature 3: European Patent Application Publication No. 1180439
Patent Literature 4: European Patent Application Publication EP 0 993 970 A1
Patent Literature 5: Japanese Patent Application Publication No. JP H08-282225 A
Patent Literature 6: Japanese Patent Application Publication No. JP H07-257121 A
Patent Literature 7: Japanese Utility Model Publication No. JP S58 146703 U
Patent Literature 8: International Application WO 2010/084557 A1

### Summary of Invention

### Technical Problem

The connection mechanism disclosed in Patent Literature 1 enables a simple structure and is suitable for achieving a smaller size. However, there is a problem with the reliability of engagement and disengagement, and the connection mechanism may become disengaged when the engaging portion is twisted due to impact or vibration.

The connection mechanism disclosed in Patent Literature 2 does not become disengaged unless the lever, which is the abutting member, is manipulated. However, there is a problem that the form of the coupling member may be relatively large since it is necessary to insert the connecting head portion into the coupling member and press the connecting head portion toward the notch using the lever to achieve coupling.

The connection mechanism disclosed in Patent Literature 3 is capable of preventing withdrawal of the connecting head portion by simply inserting the connecting head portion into the coupling member and hooking the pawl of the lever on the rear end of the connecting head portion. However, even in this connection mechanism having such a configuration, it is difficult to achieve a smaller coupling member since it is necessary, for example, to have the manipulable portion of the lever projecting out of the coupling member body to increase the range of movement of the lever.

It is thus an object of the present invention to provide a connection mechanism for a tire slip prevention device that is capable of solving each of the problems above to ensure the reliability of an engaged state and achieve a smaller size.

### Solution to Problem

A connection mechanism for a tire slip prevention device according to the present invention to achieve the object above is configured to connect ends of a wire disposed along a longitudinal direction of a tire slip prevention device for vehicles and positioned on at least one of an inner position or an outer position of a tire when mounted on the tire. The connection mechanism includes: a coupling member including one end, a coupling base portion on the one end, another end, and a tubular body on the other end, one end of the wire being engaged with the coupling base portion, the tubular body having an insertion opening; a connecting head portion having a projection surface, another end of the wire being connected to the projection surface, the projection surface being greater than a diameter of the wire and capable of being inserted into the insertion opening; and a clamping means disposed inside the body, the clamping means including pawls configured to clamp a rear end of the connecting head portion inserted from the insertion opening or a constricted portion provided on the connecting head portion, wherein the clamping means is formed by joining a pair of clamping pieces, the clamping pieces including pressing portions, the pawls, and pivots positioned between the pressing portions and the pawls, the pair of clamping pieces being joined at the pivots as an axis, and wherein the body is provided with notched portions on a side surface corresponding to a location position of the pressing portions when the clamping means is contained in the body, the notched portions being recessed in a direction in which a pair of the pressing portions approach each other.

Having such characteristics facilitates manipulation of the pressing portions even if the clamping means is formed to be completely contained inside an outer shape of the body.

In the connection mechanism for a tire slip prevention device having the characteristics above, the clamping means may be provided with a biasing means configured to generate a biasing force in a direction in which a pair of the pawls approach each other. Having such a characteristic enables the good property of preventing withdrawal to be maintained after the connecting head portion is clamped by the pawls.

In the connection mechanism for a tire slip prevention device having the characteristics above, the biasing means may be disposed between the pivot and the pawl. Having such a characteristic prevents the biasing means from interfering with the pressing portions when manipulating the pressing portions. There is thus a high degree of flexibility in the form of the biasing means.

In the connection mechanism for a tire slip prevention device having the characteristics above, the biasing means may be disposed between the pivot and the pressing portion. Having such a characteristic enables the distance between the pivot and the pawl to be reduced. The body can thus be made shorter, and the connection mechanism can be made more compact.

In the connection mechanism for a tire slip prevention device having the characteristics above, one end of the wire may be provided with an engaging head portion having a projection surface greater than the diameter of the wire, and the body may accommodate the engaging head portion therein and the coupling base portion may include an opening greater than the diameter of the wire and smaller than the projection surface of the engaging head portion. Having such characteristics enables the body to rotate in a radial direction with respect to an axial direction of the wire.

In the connection mechanism for a tire slip prevention device having the characteristics above, engagement of one end of the wire with the body may be formed by a support pin supporting the clamping means. Having such a characteristic enables the body to be shorter and the connection mechanism to be made more compact.

In the connection mechanism for a tire slip prevention device having the characteristics above, it is desired that the clamping means includes, between the pivot and a front end of the pawl, a projection preventing the front end from moving inward into the body. Having such a characteristic enables the location position of the clamping means to be stabilized even when the connecting head portion is not inserted in the body.

### Advantageous Effects of Invention

The connection mechanism for a tire slip prevention device having the characteristics above is capable of ensuring the reliability of an engaged state and achieving a smaller size.

### Brief Description of Drawings

[FIG. 1] A perspective view illustrating an external configuration of a connection mechanism for a tire slip prevention device according to a first embodiment.
[FIG. 2] An exploded perspective view illustrating a configuration of the connection mechanism for a tire slip prevention device according to the first embodiment.
[FIG. 3] A cross-sectional view illustrating the configuration of the connection mechanism for a tire slip prevention device according to the first embodiment.
[FIG. 4] An exploded cross-sectional view illustrating a schematic configuration of a clamping means.
[FIG. 5] A diagram illustrating a configuration of the clamping means viewed from a front end.
[FIG. 6] A side view illustrating a configuration of a connecting head portion.
[FIG. 7] A front view illustrating the configuration of the connecting head portion.
[FIG. 8] Diagrams for describing movements of connecting and disconnecting wire ends by the connection mechanism for a tire slip prevention device according to an embodiment.
[FIG. 9] A cross-sectional view of a connection mechanism for a tire slip prevention device according to a second embodiment.
[FIG. 10] A diagram illustrating a configuration of an eye end provided on another end of a wire in the connection mechanism for a tire slip prevention device according to the second embodiment.
[FIG. 11] A cross-sectional view of a connection mechanism for a tire slip prevention device according to a third embodiment.
[FIG. 12] A cross-sectional view of a connection mechanism for a tire slip prevention device according to a fourth embodiment with the clamping means closed.
[FIG. 13] A cross-sectional view of the connection mechanism for a tire slip prevention device according to the fourth embodiment with the clamping means open.
[FIG. 14] A diagram illustrating a variation in a case in which a biasing means is a leaf spring.
[FIG. 15] A diagram illustrating a variation in a case in which a projection is provided on a front end of a clamping piece forming the clamping means.
[FIG. 16] A partly enlarged cross-sectional view illustrating a configuration of pawls and an insertion opening according to a variation.
[FIG. 17] A diagram illustrating a variation in a case in which an inclined surface is provided on the clamping piece and a receiving surface is provided on a body.
[FIG. 18] A diagram illustrating a variation in a case in which a front end of the body is open.
[FIG. 19] A diagram illustrating a variation in a case in which a constricted portion is provided on the connecting head portion.
[FIG. 20] A perspective view illustrating a configuration of an inner side of a tire when the tire slip prevention device is mounted on the tire.

### Description of Embodiments

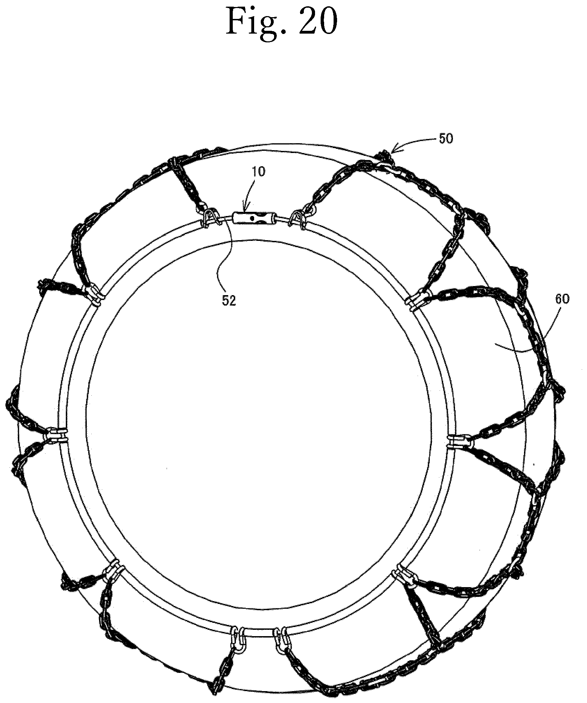

Embodiments of a connection mechanism for a tire slip prevention device of the present invention will be described below with reference to the drawings. As illustrated in FIG. 20, the connection mechanism of the embodiments shown below will be described based on being provided to connect both ends (one end and the other end) of a wire 52 disposed on an inner position of a tire 60 and provided on an end in a width direction of a tire slip prevention device 50 for vehicles along a longitudinal direction, with the tire slip prevention device 50 covering an outer circumference of the tire 60 along a circumferential direction. The embodiments shown below are also a part of suitable embodiments for carrying out the present invention, and are considered as a part of the present invention even when alterations are made to a part of the configuration as long as the effects thereof are produced.

### [First Embodiment]

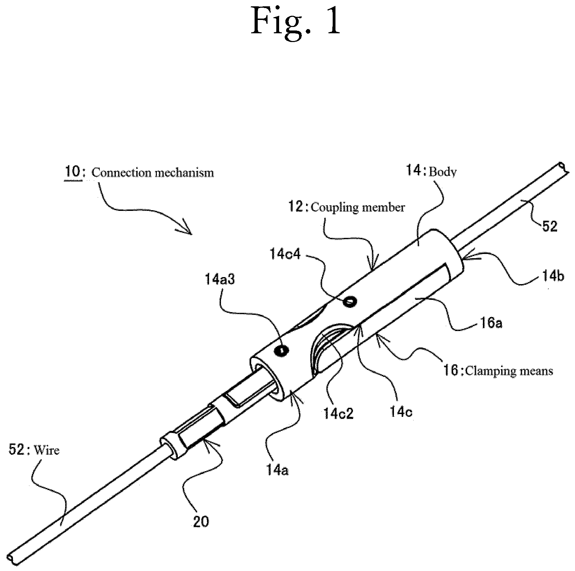

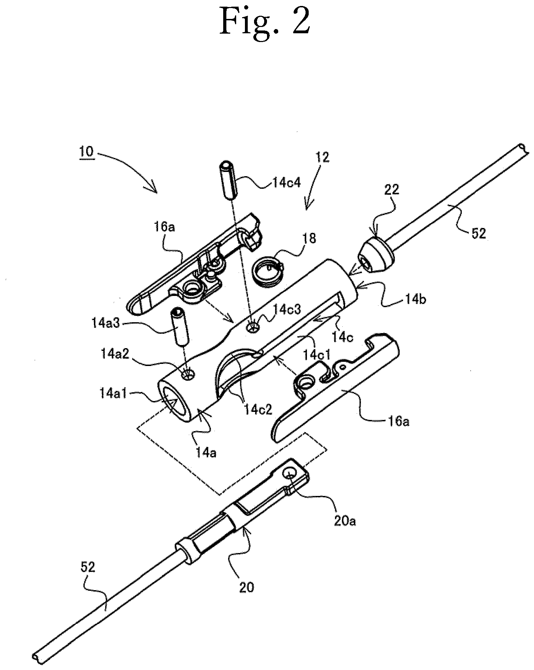

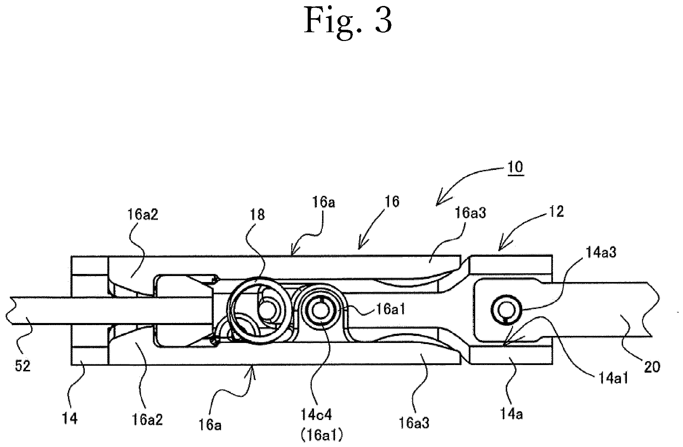

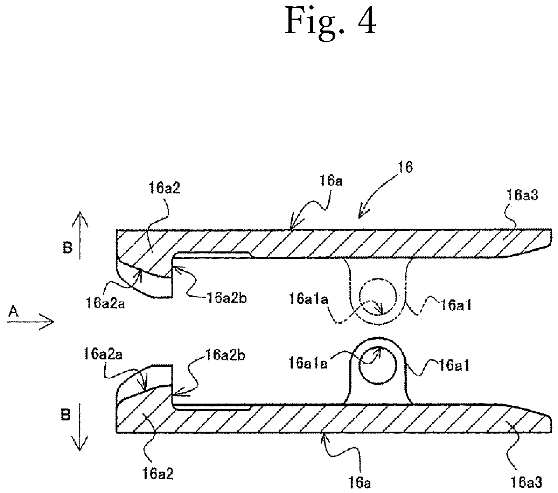

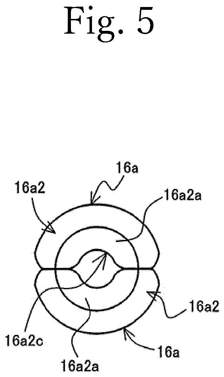

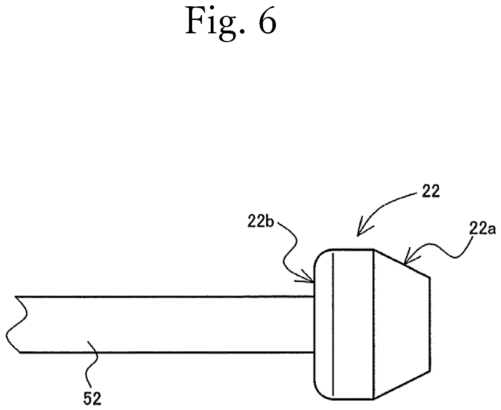

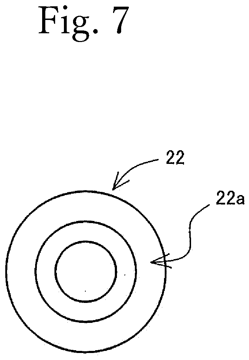

A connection mechanism for a tire slip prevention device according to a first embodiment (hereinafter, simply referred to as a connection mechanism 10) will now be described with reference to FIGS. 1 to 7. FIG. 1 is a perspective view illustrating an external configuration of the connection mechanism according to the first embodiment, and FIG. 2 is an exploded perspective view thereof. FIG. 3 is a diagram illustrating a cross-sectional configuration of the connection mechanism according to the first embodiment. FIG. 4 is a cross-sectional view illustrating a schematic configuration of a clamping means, and FIG. 5 is a diagram illustrating pawls when the clamping means is closed viewed from a front end. FIG. 6 is a side view illustrating a configuration of a connecting head portion, and FIG. 7 is a front view illustrating the configuration of the connecting head portion (configuration of FIG. 6 viewed from the right).

The connection mechanism 10 according to this embodiment basically includes a coupling member 12 and a connecting head portion 22. The coupling member 12 is an element with which one end of the wire 52 that is to be connected is engaged and which holds the connecting head portion 22 described further below with the connecting head portion 22 inserted therein. The coupling member 12 basically includes a body 14, a clamping means 16, and a biasing means 18. The body 14 is composed of a tubular body, and includes a coupling base portion 14a on one end and an insertion opening 14b on the other end in a longitudinal direction, and a clamping means disposing opening 14c on a side surface. The shape of the projection surface of the tubular body may be polygonal such as triangular, rectangular, pentagonal, or hexagonal, or may be elliptical, but the form of the body 14 in this embodiment is cylindrical. Having such a form prevents the body 14 from catching onto members disposed therearound and enables a smaller size. The members constituting the body 14 may be made of a metal material or a resin material as long as it is a material capable of withstanding tensile load, impact, and the like when the tire slip prevention device 50 is used attached to the tire 60, but when a material with low weather resistance is used, it is desirable, for example, to provide a protective coating.

The coupling base portion 14a is configured to be engageable with one end of the wire 52. In the forms illustrated in FIGS. 1 to 3, a press-fitting hole 14a2 is provided on a side surface in the vicinity of an opening 14a1 provided on one end. A rivet fitting (so-called eye end 20) that has a through hole 20a provided on an engaging end is provided on one end of the wire 52 that is to be engaged with the coupling base portion 14a. In such a configuration, the eye end 20 is inserted inside the body 14 from the opening 14a1 of the coupling base portion 14a, and a retaining pin 14a3 is disposed so as to pass through both the press-fitting hole 14a2 formed on the side surface and the through hole 20a of the eye end 20, so that the one end of the wire 52 engages with the coupling member 12.

The insertion opening 14b is an opening that has a projection surface capable of having the connecting head portion 22 described further below inserted thereinto. In this embodiment, the shape of an open end of the tubular body that forms the body 14 is the insertion opening 14b.

The clamping means disposing opening 14c is an opening for disposing the clamping means 16 described further below. Although the specific configuration thereof is not limited, in this embodiment, the clamping means disposing opening 14c includes a long hole 14c1 and notched portions 14c2, and a pair of the clamping means disposing opening 14c are disposed on opposite positions on the side surface of the body 14. In the coupling member 12 according to this embodiment, the long hole 14c1 is formed along the longitudinal direction of the body 14, and the entirety (outer shape) of clamping pieces 16a constituting the clamping means 16 can be fitted therein. This is because such a configuration prevents the clamping means 16 from protruding outside the body 14 when the clamping means 16 is disposed in the coupling member 12, and enables a smaller size to be achieved. Additionally, the notched portions 14c2 are formed by providing notches on a pair of long sides forming the long hole 14c1, and are provided more toward the coupling base portion 14a than a center portion in a longitudinal direction of the long hole 14c1. Providing the notched portions 14c2 having such a configuration on the clamping means disposing opening 14c improves the manipulability of pressing portions 16a3 that constitute the clamping means 16 when the clamping means 16 is disposed in the body 14. The notched portions 14c2 are not essential elements when providing the clamping means disposing opening 14c. Thus, the notched portions 14c2 need not be provided so as to continue from the long hole 14c1 as illustrated in FIGS. 1 and 2 as long as the manipulability of the pressing portions 16a3 of the clamping pieces 16a can be improved.

Additionally, a press-fitting hole 14c3 for disposing a support pin 14c4 that supports the clamping means 16 is provided on the side surface of the body 14 between the pair of the clamping means disposing openings 14c. In this embodiment, the press-fitting hole 14c3 is provided on a portion of the side surface slightly closer to the notched portions 14c2 with the center of the longitudinal direction of the long hole 14c1 as the reference point.

The clamping means 16 is an element that clamps the connecting head portion 22 inserted from the insertion opening 14b inside the body 14 to prevent withdrawal of the other end of the wire 52 and maintain the connected state of the wire 52. The clamping means 16 is composed of a pair of the clamping pieces 16a. Each clamping piece 16a is basically a plate piece that is substantially rectangular, and is provided with a pivot 16a1, a pawl 16a2, and the pressing portion 16a3. The pivot 16a1 is provided in the vicinity of a center portion in a longitudinal direction of the plate piece. The pivot 16a1 in the form illustrated in FIGS. 3 and 4 is a projection projecting in a thickness direction of the plate piece, and has a through hole 16a1a provided along a width direction of the plate piece. The pair of the clamping pieces 16a are disposed facing each other such that the through holes 16a1a are aligned, and the pivots 16a1 are secured by the support pin 14c4, so that the clamping pieces 16a can be rotated about the pivots 16a1.

The pawl 16a2 is provided on an end (hereinafter, front end) of the clamping piece 16a disposed toward the insertion opening 14b. The pawl 16a2 is a projection formed projecting in the thickness direction of the plate piece, in the same direction as the pivot 16a1. As illustrated in FIG. 4, the pawl 16a2 is shown to have an inclined portion 16a2a and a reverse portion 16a2b when viewed from the side. The inclined portion 16a2a is formed in an arc along a projection direction from the front end toward a rear end. Such a configuration causes the pawl 16a2 to be pushed up in a direction away from the center of the coupling member 12 (direction indicated by the arrow B in FIG. 4) when a force in a direction along a longitudinal direction of the coupling member 12 (direction indicated by the arrow A in FIG. 4) is applied to the inclined portion 16a2a. The reverse portion 16a2b is a side forming a rear end of the pawl 16a2, and is perpendicular to the plate piece forming the clamping piece 16a or inclined slightly toward the rear end with the plate piece as a reference point. Such a configuration enables a member engaged with the reverse portion 16a2b to be held so as to prevent withdrawal thereof.

As illustrated in FIG. 5, the clamping piece 16a according to this embodiment is provided with a notch 16a2c on a front end of the pawl 16a2 when the pawl 16a2 is viewed from the front. Such a configuration enables the wire 52 extending from a rear end of the connecting head portion 22 to be avoided when the connecting head portion 22 is inserted. The pair of the pawls 16a2 can thus be completely closed with the connecting head portion 22 inserted between the pair of the clamping pieces 16a. The clamping pieces 16a according to this embodiment have an arched external shape when viewed from the front to match the external shape of the body 14. Such a form prevents the clamping means 16 from protruding outside the body 14, and enables the coupling member 12 to have a compact configuration.

The pressing portion 16a3 is a portion positioned on an opposite side of the pivot 16a1 from the pawl 16a2 in the clamping piece 16a. The force applied to the pressing portion 16a3 acts on the pawl 16a2 via the pivot 16a1 as a force acting in an opposite direction by the principle of leverage. Thus, when the pressing portion 16a3 of the clamping piece 16a that is secured to the body 14 is pressed such that the pressing portion 16a3 is pushed into the body 14, this acts on the pawl 16a2 as a force in a direction so as to separate the pawl 16a2 from the body 14. Consequently, when the pressing portions 16a3 of the pair of the clamping pieces 16a are pressed so as to be pinched, each clamping piece 16a rotates about the pivot 16a1 and the pair of the pawls 16a2 move in a direction to open.

Although the relationship between the distance between the pressing portion 16a3 (rear end) and the pivot 16a1 and the distance between the pivot 16a1 and the pawl 16a2 (front end) is not limited, the distance between the pressing portion 16a3 and the pivot 16a1 being shorter than the distance between the pivot 16a1 and the pawl 16a2 enables the pawls 16a2 to be spread wider relative to the amount of depression of the pressing portions 16a3. Additionally, the members constituting the clamping means 16 may be made of a metal material or a resin material, similarly to the body 14, as long as the strength in use is maintained.

In this embodiment, a spring as the biasing means 18 is provided between the pair of the clamping pieces 16a. The spring may be any spring that generates a biasing force in the direction to close the pawls 16a2. In the example illustrated in FIGS. 2 and 3, a helical torsion spring is employed as the biasing means 18 which is disposed between the pivot 16a1 and the front end (pawl 16a2).

The connecting head portion 22 is an element that is provided on the other end of the wire 52 to be connected, and inserted into the insertion opening 14b of the coupling member 12. The connecting head portion 22 has a projection surface greater than a diameter of the wire 52 and capable of being inserted into the opening of the insertion opening 14b when viewed in an axial direction of the wire 52 (see FIG. 7). Additionally, an inclined surface 22a that has a projection surface smaller at a front end compared to a rear end (wire projecting side) is provided on a side surface of the connecting head portion 22. In this embodiment, the form of the projection surface of the connecting head portion 22 is circular, and the total form is configured as a circular truncated cone. Thus, at least a diameter of the larger circle is greater than the diameter of the wire, and capable of being inserted into the opening of the insertion opening 14b. Although in the form illustrated in FIG. 6, a rear end surface 22b of the connecting head portion 22 is a flat surface, it may be in the form of an arrowhead with an inclined surface extending from an outer circumference toward the center (where the wire 52 is disposed) and toward the front end.

Providing the inclined surface 22a on the front end of the connecting head portion 22 enables the inclined surface 22a to abut against the inclined portions 16a2a provided on the pawls 16a2 of the clamping means 16 when the connecting head portion 22 is inserted into the coupling member 12 to assist opening of the pawls 16a2 by the pressing force. Additionally, the rear end surface 22b of the connecting head portion 22 being a flat surface or in the form of an arrowhead facilitates catching of the pawls 16a2 of the clamping means 16 thereon, and enables the engaged state to be maintained. The constituting members of the connecting head portion 22 may also be made of a metal material or a resin material, similarly to the body 14 and the clamping means 16 of the coupling member 12 described above, as long as the strength in use is maintained. Connection (securing) to the wire 52 may be made by pressure bonding or the like when made of a metal material and by welding or the like when made of a resin material, but other existing securing methods such as screw fastening using a set screw or the like may also be employed.

### [Operation]

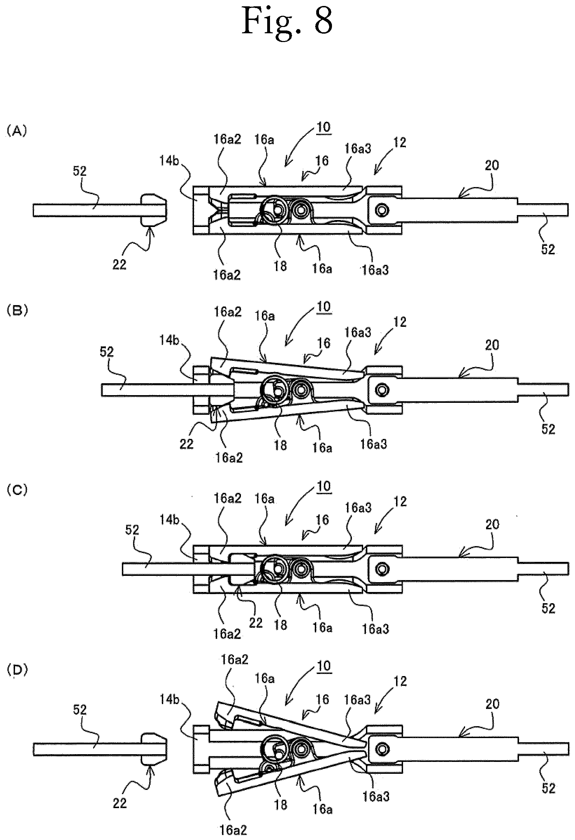

The connecting movement and disconnecting movement of the ends of the wire 52 by the connection mechanism 10 having the configuration described above will next be described with reference to FIG. 8. As described above, the connection mechanism 10 has the coupling member 12 on one end of the wire 52 which is disposed on the inner position of the tire 60 and on the end in the width direction of the tire slip prevention device 50 for vehicles along the longitudinal direction, and has the connecting head portion 22 on the other end, with the tire slip prevention device 50 covering the outer circumference of the tire 60 along the circumferential direction.

Firstly, with the one end of the wire 52 or the coupling member 12 supported, the other end of the wire 52 is held and the connecting head portion 22 is inserted into the insertion opening 14b of the coupling member 12 (see FIG. 8(A)). After the inclined surface 22a of the connecting head portion 22 comes into contact with the inclined portions 16a2a of the pawls 16a2 inside the body 14, a force is applied so as to further push in the connecting head portion 22 so that the pawls 16a2 of the clamping means 16 open and the connecting head portion 22 enters between the pair of the clamping pieces 16a (see FIG. 8(B)). After the pawls 16a2 are opened, the connecting head portion 22 is pushed in further so that the pawls 16a2 pass over the connecting head portion 22. The pawls 16a2 that have passed over the connecting head portion 22 fall into the rear end of the connecting head portion 22 so as to close by the biasing force of the biasing means 18. Accordingly, withdrawal of the connecting head portion 22, that is, the other end of the wire 52 is prevented, and the connection of the one end to the other end of the wire 52 is completed (see FIG. 8(C)).

The disconnection will next be described. For disconnection, the pressing portions 16a3 of the clamping means 16 are pushed down so as to be pinched. This movement causes a force in an opening direction to act on the pawls 16a2 so that the pawls 16a2 open. By pulling the connecting head portion 22 out of the coupling member 12 with the pawls 16a2 open, the disconnection is completed (see FIG. 8(D)).

### [Effects]

The connection mechanism 10 described above is capable of preventing withdrawal by the pawls 16a2 of the clamping means 16 being caught on the rear end surface 22b of the connecting head portion 22. The reliability of the connected state is thus ensured. Additionally, a smaller size is achieved by forming the coupling member 12 as a tubular body that is slightly larger than the connecting head portion 22 and accommodating the entire mechanism inside the tubular body.

Additionally, to connect, the connecting head portion 22 is linearly inserted into the coupling member 12, and to disconnect, the pressing portions 16a3 are pushed down so as to be pinched. Thus, the movements for connecting and disconnecting the ends of the wire 52 are simplified.

Furthermore, in the connection mechanism 10 according to the embodiment above, the pawls 16a2 that engage with the connecting head portion 22 is provided as a pair so that the clamping pieces 16a open in opposite directions. Thus, an opening through which the connecting head portion 22 can be inserted and removed is ensured even if the movement of each of the clamping pieces 16a is small.

Additionally, in the connection mechanism 10 according to the embodiment above, withdrawal of the connecting head portion 22 can be prevented even if the pawl 16a2 of one of the clamping pieces 16a is opened by a force being unexpectedly applied to the pressing portion 16a3 of only one of the clamping pieces 16a, if the pawl 16a2 of the other clamping piece 16a is closed.

That is, disconnection of the connection mechanism 10 according to the embodiment above is made possible by the intentional manual effort of pinching the pair of the pressing portions 16a3, and high security is ensured in that disconnection does not occur due to an unintentional action such as one of the pressing portions 16a3 receiving a pressing force.

### [Second Embodiment]

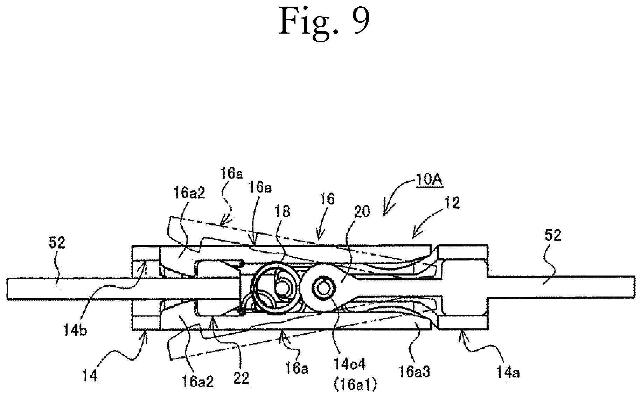

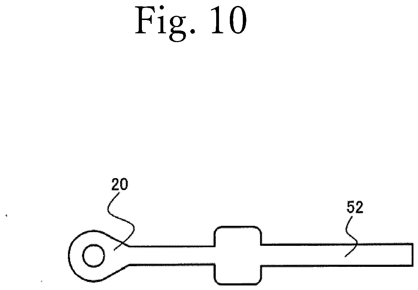

A connection mechanism for a tire slip prevention device according to a second embodiment will next be described with reference to FIGS. 9 and 10. Most of the configurations of a connection mechanism 10A according to this embodiment are the same as those of the connection mechanism 10 according to the first embodiment described above. Thus, the same reference signs are given to the places having the same function in the drawings, and detailed description will be omitted.

The difference between the connection mechanism 10A according to this embodiment and the connection mechanism 10 according to the first embodiment is in the engaged state of one end of the wire 52 and the coupling member 12. Specifically, in the connection mechanism 10 according to the first embodiment, the eye end 20 is provided on one end of the wire 52 and inserted into the coupling base portion 14a, and the engagement is formed by the retaining pin 14a3.

However, in the connection mechanism 10A according to this embodiment, the eye end 20 is inserted further inward than the first embodiment, so that the engagement of the eye end 20 is formed by the support pin 14c4 that supports the clamping means 16. Such a configuration eliminates the need to provide the press-fitting hole 14a2 for disposing the retaining pin 14a3 in the coupling base portion 14a of the body 14. Thus, the body 14 can be made shorter, and the connection mechanism 10A can be made smaller.

### [Effects]

The connection mechanism 10A having such a configuration is also capable of obtaining the same effects as those of the connection mechanism 10 according to the first embodiment. That is, the reliability of the connected state is ensured. A smaller size is also achieved. Additionally, the movements for connecting and disconnecting the ends of the wire 52 are simplified. Furthermore, an opening through which the connecting head portion 22 can be inserted and removed is ensured even if the movement of each of the clamping pieces 16a is small.

### [Third Embodiment]

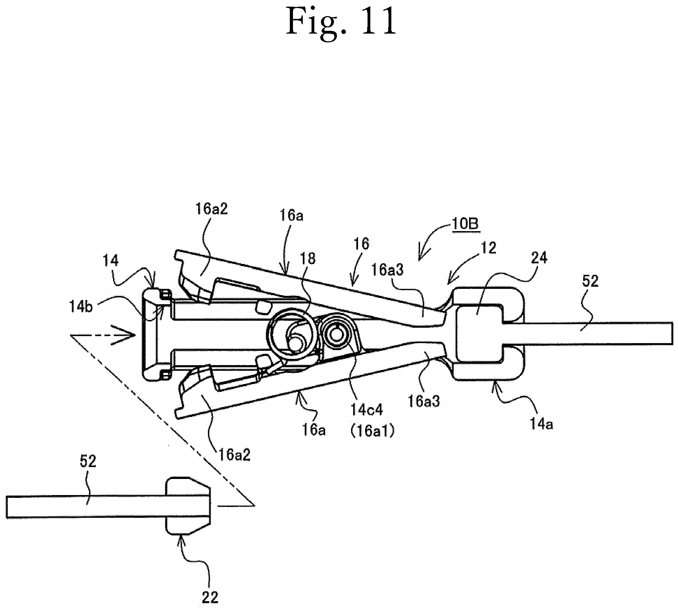

A connection mechanism for a tire slip prevention device according to a third embodiment will next be described with reference to FIG. 11. Most of the configurations of a connection mechanism 10B according to this embodiment are the same as those of the connection mechanisms 10, 10A according to the first and second embodiments described above. Thus, the same reference signs are given to the places having the same function in the drawings, and detailed description will be omitted.

In a case in which the connection mechanism 10 according to the first embodiment is the basis, the difference between the connection mechanism 10B according to this embodiment and the connection mechanism 10 according to the first embodiment is in the engaged state of one end of the wire 52 and the coupling member 12. Specifically, in the connection mechanism 10 according to the first embodiment, the eye end 20 is provided on one end of the wire 52 and inserted into the coupling base portion 14a, and the engagement is formed by the retaining pin 14a3.

However, in the connection mechanism 10B according to this embodiment, an engaging head portion 24 is provided on one end of the wire 52, and the engagement with the coupling member 12 is made through the engaging head portion 24. The engaging head portion 24 has a projection surface that is greater than the diameter of the wire 52 and the opening 14a1 provided on the coupling base portion 14a and capable of being accommodated inside the body 14 forming the coupling member 12 when viewed in the axial direction of the wire 52.

Such a configuration prevents withdrawal of the engaging head portion 24 by the coupling base portion 14a, and enables the engaging head portion 24 to rotate with respect to the body 14 in a radial direction relative to the axial direction. Thus, in a case in which one end of the wire 52 is a reference point, the coupling member 12 can be rotated in the radial direction, and the manipulability and the like of the pressing portions 16a3 of the clamping means 16 can be improved.

Similarly to the connecting head portion 22, the engaging head portion 24 is connected and made by methods such as pressure bonding of metal members or welding of resin members. In a case in which the body 14 is made of metal, one end having the engaging head portion 24 is inserted into the coupling base portion 14a which is then subjected to a drawing process or the like to narrow the opening 14a1. In a case in which the opening 14a1 is formed smaller than the projection surface of the engaging head portion 24 in advance such as by making the body 14 from resin, one end of the wire 52 that is not engaged with the engaging head portion 24 is inserted into the body 14 and projected from the insertion opening 14b. The one end of the wire 52 projected from the insertion opening 14b is then provided with the engaging head portion 24 and accommodated inside the body 14.

### [Effects]

The connection mechanism having such a configuration is also capable of obtaining the same effects as those of the connection mechanisms 10, 10A according to the first and second embodiments. That is, the reliability of the connected state is ensured. A smaller size is also achieved. Additionally, the movements for connecting and disconnecting the ends of the wire 52 are simplified. Furthermore, an opening through which the connecting head portion 22 can be inserted and removed is ensured even if the movement of each of the clamping pieces 16a is small.

### [Fourth Embodiment]

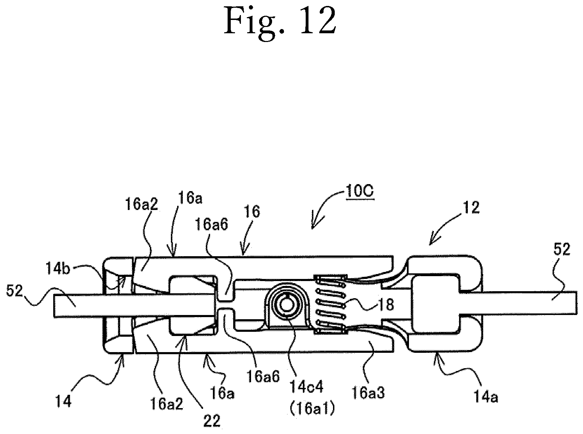

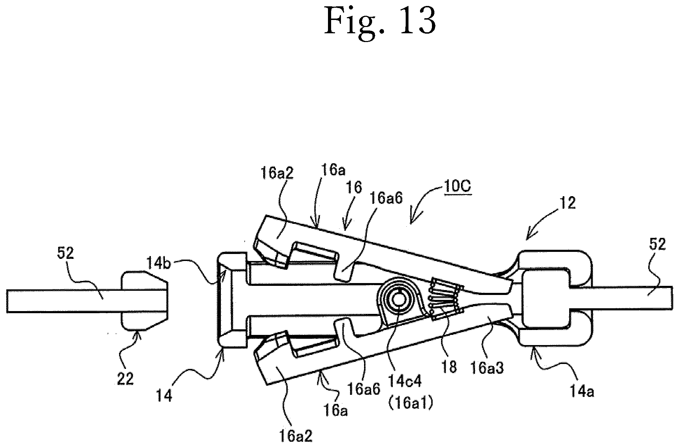

A connection mechanism for a tire slip prevention device according to a fourth embodiment will next be described with reference to FIGS. 12 and 13. Most of the configurations of a connection mechanism 10C according to this embodiment are the same as those of the connection mechanisms 10, 10A, 10B according to the first to third embodiments described above. Thus, the same reference signs are given to the places having the same function in the drawings, and detailed description will be omitted.

In a case in which the connection mechanism 10B according to the third embodiment is the basis, the difference between the connection mechanism 10C according to this embodiment and the connection mechanism 10B according to the third embodiment is in the form and location position of the spring as the biasing means 18. Specifically, in the connection mechanism 10B according to the third embodiment, the biasing means 18 is a helical torsion spring that is disposed between the pivot 16a1 and the pawl 16a2.

However, in the connection mechanism 10C according to this embodiment, the spring as the biasing means 18 is a coil spring that is disposed between the pivot 16a1 and the pressing portion 16a3. Employing a coil spring that generates a biasing force in a direction of extension enables a reaction force to be obtained against a compressive force. The biasing means 18 can thus be disposed between the pivot 16a1 and the pressing portion 16a3. Consequently, the distance between the pivot 16a1 and the pawl 16a2 can be reduced, and the connection mechanism 10C can be made smaller. In the case in which such a configuration is employed, a stopper 16a6 that prevents the connecting head portion 22 from coming into contact with the pivot 16a1 (the biasing means 18 when applied to the connection mechanisms 10, 10A, 10B according to the first to third embodiments) may be provided between the pivot 16a1 and the pawl 16a2.

### [Effects]

The connection mechanism 10C having such a configuration is also capable of obtaining the same effects as those of the connection mechanisms 10, 10A, 10B according to the first to third embodiments. That is, the reliability of the connected state is ensured. A smaller size is also achieved. Additionally, the movements for connecting and disconnecting the ends of the wire 52 are simplified. Furthermore, an opening through which the connecting head portion 22 can be inserted and removed is ensured even if the movement of each of the clamping pieces 16a is small.

### [Variation]

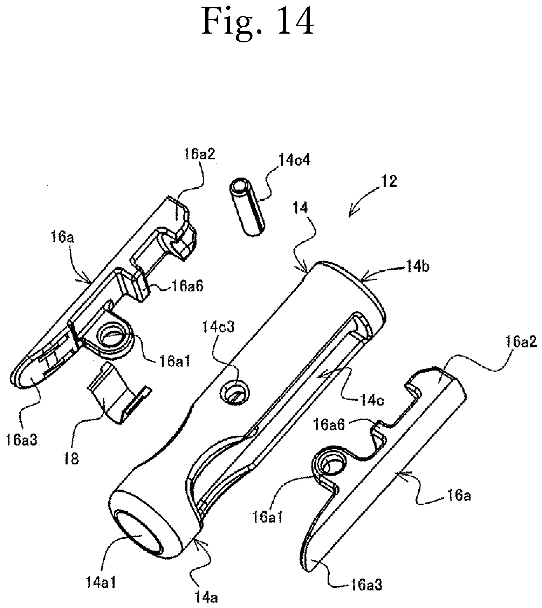

In the embodiments described above, a coil spring (including a helical torsion spring) is employed for the spring as the biasing means 18. However, the form of the biasing means 18 is not limited as long as a biasing force can be generated in a desired direction. Thus, a leaf spring such as illustrated in FIG. 14 may be employed as the biasing means 18.

In the embodiments described above, the support of the clamping means 16 to the body 14 in the coupling member 12 is provided only by the support pin 14c4. There is no problem with the configuration of the connection mechanism 10 (10A to 10C) having such a configuration. However, in the case in which the clamping means 16 is supported by only one pin, the location position of the clamping means 16 may be unstable when the connecting head portion 22 is not inserted.

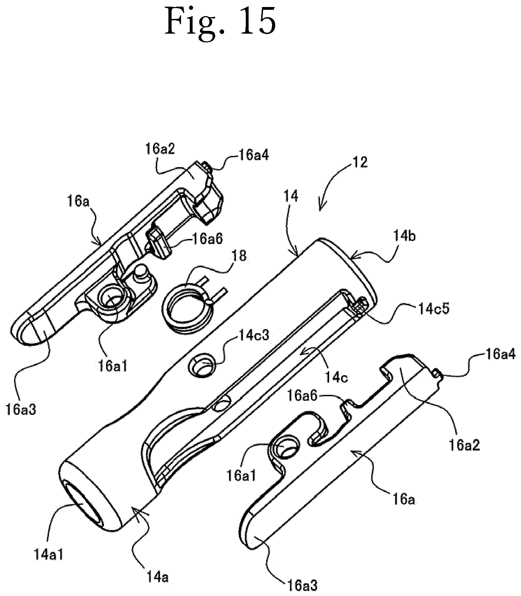

Thus, as illustrated in detail in FIG. 15, a projection 16a4 may be provided on at least a portion between the pivot 16a1 and the front end (pawl 16a2), and a recess 14c5 that accommodates the projection 16a4 may be provided in the body 14. A thickness of the projection 16a4 is smaller than a thickness of the member forming an outer shell of the body 14, and the recess 14c5 provided in the body 14 is formed having a base plate in a thickness direction. Such a configuration enables each of the clamping pieces 16a constituting the clamping means 16 to be supported by at least the two points of the support pin 14c4 and the base plate of the recess 14c5 even when the connecting head portion 22 is not inserted, so that the location position can be stabilized.

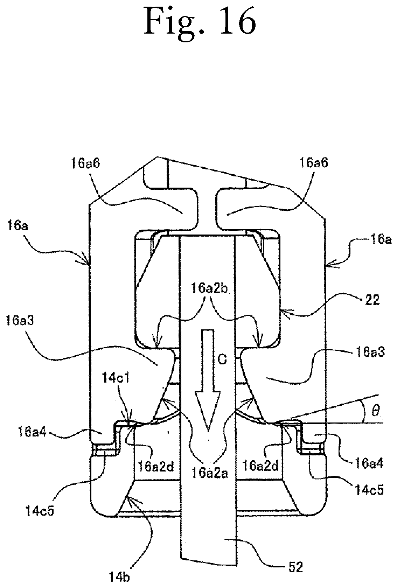

Additionally, a reaction force receiving portion 16a2d as illustrated in FIG. 16 may be provided on a front end of the inclined portion 16a2a forming the pawl 16a2. The reaction force receiving portion 16a2d is an inclined surface from an inner circumference toward an outer circumference of the inclined portion 16a2a of the pawl 16a2 having an angle of inclination θ toward a rear end of the clamping piece 16a. By providing the reaction force receiving portion 16a2d having such a configuration, the reaction force receiving portion 16a2d abuts against a short side of the long hole 14c1 in the body 14 when a force in a direction indicated by the arrow C is applied to the connecting head portion 22 so that the clamping piece 16a is pulled in the direction indicated by the arrow C. Thus, load on the support pin 14c4 and the pawl 16a2 is reduced, and the effect of preventing withdrawal of the connecting head portion 22 is improved by the pawl 16a2 receiving a force that pushes the pawl 16a2 inward into the body 14 by the action of the angle of inclination θ.

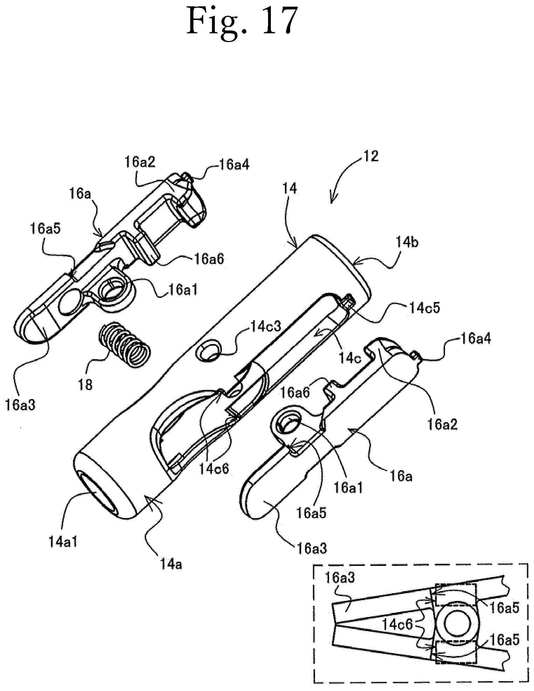

The element for positioning the clamping means 16 need not necessarily be the projection 16a4, and it is only required that there is a point or surface at which the clamping piece 16a comes into contact with the body 14 when a force that causes the pawl 16a2 to move inward into the body 14 is applied to the pawl 16a2. For example, in the example illustrated in FIG. 17, an abutting surface 16a5 is provided in the vicinity of the pivot 16a1 of the clamping piece 16a toward the pressing portion 16a3. Additionally, a projection having a receiving surface 14c6 is formed on the body 14 so as to reduce a width of the clamping means disposing opening 14c in the vicinity of the pivot 16a1 of the clamping piece 16a (an image of the relationship between the abutting surface 16a5 and the receiving surface 14c6 is illustrated in the frame drawn in dashed lines in FIG. 17).

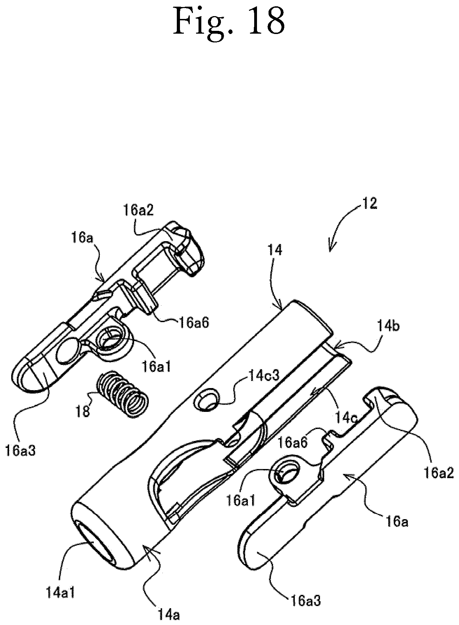

In the embodiments above, the insertion opening 14b and the clamping means disposing opening 14c are separate openings, and a portion of the body 14 is interposed therebetween. However, in the connection mechanism 10 (10A to 10C) according to the present invention, the insertion opening 14b and the clamping means disposing opening 14c may communicate with each other as illustrated in FIG. 18. A portion of the body 14 positioned more toward the front end than the pawl 16a2 of the clamping means 16 does not function as a strength member to suppress opening of the pawl 16a2 or to prevent withdrawal of the connecting head portion 22. Thus, the front end of the body 14 may be shortened so that the insertion opening 14b and the clamping means disposing opening 14c communicate with each other. Such a configuration enables the total length of the coupling member 12 to be reduced, and the connection mechanism 10 (10A to 10C) to be made smaller.

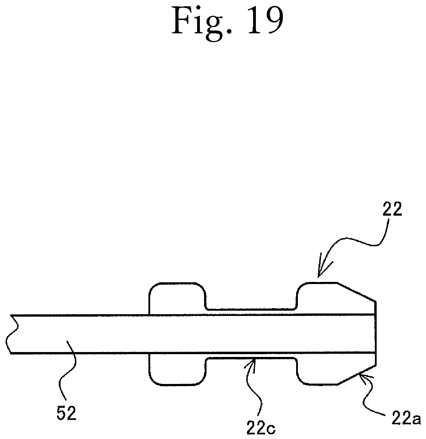

The connecting head portion 22 in the embodiments above have been described as having a circular truncated cone shape. However, as illustrated in FIG. 19, a constricted portion 22c may be provided on a side wall so that the pawl 16a2 can catch on the constricted portion 22c.

### Reference Signs List

10, 10A, 10B, 10C...Connection mechanism, 12...Coupling member, 14...Body, 14a...Coupling base portion, 14a1...Opening, 14a2...Press-fitting hole, 14a3...Retaining pin, 14b...Insertion opening, 14c...Clamping means disposing opening, 14c1...Long hole, 14c2...Notched portion, 14c3...Press-fitting hole, 14c4...Support pin, 14c5...Recess, 14c6...Receiving surface, 16...Clamping means, 16a...Clamping piece, 16a1...Pivot, 16a1a...Through hole, 16a2...Pawl, 16a2a...Inclined portion, 16a2b...Reverse portion, 16a2c...Notch, 16a2d...Reaction force receiving portion, 16a3...Pressing portion, 16a4... Projection, 16a5...Abutting surface, 16a6...Stopper, 18...Biasing means, 20...Eye end, 20a...Through hole, 22... Connecting head portion, 22a...Inclined surface, 22b...Rear end surface, 22c...Constricted portion, 24...Engaging head portion, 50... Tire slip prevention device, 52... Wire, 60... Tire.

## Claims

1. A connection mechanism (10, 10A-10C) for a tire slip prevention device (50) configured to connect ends of a wire (52) disposed along a longitudinal direction of a tire slip prevention device (50) for vehicles and positioned on at least one of an inner position or an outer position of a tire (60) when mounted on the tire (60), the connection mechanism (10, 10A-10C) comprising:
a coupling member (12) including one end, a coupling base portion (14a) on the one end, another end, and a tubular body (14) on the other end, one end of the wire (52) being engaged with the coupling base portion (14a), the tubular body (14) having an insertion opening (14b);
a connecting head portion (22) having a projection surface, another end of the wire (52) being connected to the projection surface, the projection surface being greater than a diameter of the wire (52) and capable of being inserted into the insertion opening (14b); and
a clamping means (16) disposed inside the body (14), the clamping means (16) including pawls (16a2) configured to clamp a rear end of the connecting head portion (22) inserted from the insertion opening (14b) or a constricted portion provided on the connecting head portion (22),
wherein the clamping means (16) is formed by joining a pair of clamping pieces (16a), the clamping pieces (16a) including pressing portions (16a3), the pawls (16a2), and pivots (16a1) positioned between the pressing portions (16a3) and the pawls (16a2), the pair of clamping pieces (16a) being joined at the pivots (16a1) as an axis, and
wherein the body (14) is provided with notched portions (14c2) on a side surface corresponding to a location position of the pressing portions (16a3) when the clamping means (16) is contained in the body (14), the notched portions (14c2) being recessed in a direction in which a pair of the pressing portions (16a3) approaches each other.

2. The connection mechanism (10, 10A-10C) for a tire slip prevention device (50) according to claim 1, wherein the clamping means (16) is provided with a biasing means (18) configured to generate a biasing force in a direction in which a pair of the pawls (16a2) approach each other.

3. The connection mechanism (10, 10A-10C) for a tire slip prevention device (50) according to claim 2, wherein the biasing means (18) is disposed between the pivot (16a1) and the pawls (16a2).

4. The connection mechanism (10, 10A-10C) for a tire slip prevention device (50) according to claim 2, wherein the biasing means (18) is disposed between the pivot (16a1) and the pressing portions (16a3).

5. The connection mechanism (10, 10A-10C) for a tire slip prevention device (50) according to any one of claims 1 to 4,
wherein the one end of the wire (52) is provided with an engaging head portion (24) having a projection surface greater than the diameter of the wire (52), and
wherein the body (14) accommodates the engaging head portion (24) therein, and the coupling base portion (14a) includes an opening greater than the diameter of the wire (52) and smaller than the projection surface of the engaging head portion (24).

6. The connection mechanism (10, 10A-10C) for a tire slip prevention device (50) according to any one of claims 1 to 4, wherein engagement of the one end of the wire (52) with the body (14) is formed by a support pin supporting the clamping means (16).

7. The connection mechanism (10, 10A-10C) for a tire slip prevention device (50) according to any one of claims 1 to 6, wherein the clamping means (16) includes, between the pivot (16a1) and a front end of the pawl (16a2), a projection preventing the front end from moving inward into the body (14).

## Patentansprüche

1. Verbindungsmechanismus (10, 10A-10C) für eine Reifenschlupfverhinderungsvorrichtung (50), der dazu konfiguriert ist, Enden eines Drahts (52) zu verbinden, der entlang einer Längsrichtung einer Reifenschlupfverhinderungsvorrichtung (50) für Fahrzeuge angeordnet und an einer inneren Position und/oder einer äußeren Position eines Reifens (60) positioniert ist, wenn er an dem Reifen (60) montiert ist, wobei der Verbindungsmechanismus (10, 10A-10C) umfasst:
ein Kopplungselement (12) umfassend ein Ende, einen Kopplungsbasisabschnitt (14a) an dem einen Ende, ein anderes Ende, und einen rohrförmigen Körper (14) an dem anderen Ende, wobei ein Ende des Drahts (52) mit dem Kopplungsbasisabschnitt (14a) in Eingriff ist, wobei der rohrförmige Körper (14) eine Einfügeöffnung (14b) aufweist;
einen Verbindungskopfabschnitt (22), der eine Vorsprungsoberfläche aufweist, wobei ein anderes Ende des Drahts (52) mit der Vorsprungsoberfläche verbunden ist, wobei die Vorsprungsoberfläche größer als ein Durchmesser des Drahts (52) ist und in die Einfügeöffnung (14b) eingefügt werden kann; und
eine Klemmeinrichtung (16), die innerhalb des Körpers (14) angeordnet ist, wobei die Klemmeinrichtung (16) Klinken (16a2) umfasst, die dazu konfiguriert sind, ein von der Einfügeöffnung (14b) eingefügtes hinteres Ende des Verbindungskopfabschnitts (22) oder einen an dem Verbindungskopfabschnitt (22) vorgesehenen verengten Abschnitt einzuklemmen,
wobei die Klemmeinrichtung (16) durch Verbinden eines Paars von Klemmstücken (16a) gebildet wird, wobei die Klemmstücke (16a) Pressabschnitte (16a3), die Klinken (16a2), und Drehpunkte (16a1) umfassen, die zwischen den Pressabschnitten (16a3) und den Klinken (16a2) positioniert sind, wobei das Paar von Klemmstücken (16a) an den Drehpunkten (16a1) als eine Achse verbunden sind, und
wobei der Körper (14) an einer Seitenoberfläche entsprechend einer Ortsposition der Pressabschnitte (16a3) mit gekerbten Abschnitten (14c2) versehen ist, wenn die Klemmeinrichtung (16) in dem Körper (14) enthalten ist, wobei die gekerbten Abschnitte (14c2) in einer Richtung ausgespart sind, in der sich ein Paar der Pressabschnitte (16a3) einander annähert.

2. Verbindungsmechanismus (10, 10A-10C) für eine Reifenschlupfverhinderungsvorrichtung (50) nach Anspruch 1, wobei die Klemmeinrichtung (16) mit einer Vorspanneinrichtung (18) versehen ist, die dazu konfiguriert ist, eine Vorspannkraft in einer Richtung zu erzeugen, in der sich ein Paar der Klinken (16a2) einander annähert.

3. Verbindungsmechanismus (10, 10A-10C) für eine Reifenschlupfverhinderungsvorrichtung (50) nach Anspruch 2, wobei die Vorspanneinrichtung (18) zwischen dem Drehpunkt (16a1) und den Klinken (16a2) angeordnet ist.

4. Verbindungsmechanismus (10, 10A-10C) für eine Reifenschlupfverhinderungsvorrichtung (50) nach Anspruch 2, wobei die Vorspanneinrichtung (18) zwischen dem Drehpunkt (16a1) und den Pressabschnitten (16a3) angeordnet ist.

5. Verbindungsmechanismus (10, 10A-10C) für eine Reifenschlupfverhinderungsvorrichtung (50) nach einem der Ansprüche 1 bis 4,
wobei das eine Ende des Drahts (52) mit einem Eingriffskopfabschnitt (24) versehen ist, der eine Vorsprungsoberfläche aufweist, die größer als der Durchmesser des Drahts (52) ist, und
wobei der Körper (14) den Eingriffskopfabschnitt (24) darin aufnimmt, und der Kopplungsbasisabschnitt (14a) eine Öffnung umfasst, die größer als der Durchmesser des Drahts (52) und kleiner als die Vorsprungsoberfläche des Eingriffskopfabschnitts (24) ist.

6. Verbindungsmechanismus (10, 10A-10C) für eine Reifenschlupfverhinderungsvorrichtung (50) nach einem der Ansprüche 1 bis 4, wobei ein Eingriff des einen Endes des Drahts (52) mit dem Körper (14) durch einen Stützstift gebildet ist, der die Klemmeinrichtung (16) stützt.

7. Verbindungsmechanismus (10, 10A-10C) für eine Reifenschlupfverhinderungsvorrichtung (50) nach einem der Ansprüche 1 bis 6, wobei die Klemmeinrichtung (16), zwischen dem Drehpunkt (16a1) und einem vorderen Ende der Klinke (16a2), einen Vorsprung umfasst, der verhindert, dass sich das vordere Ende nach innen in den Körper (14) bewegt.

## Revendications

1. Mécanisme de liaison (10, 10A-10C) pour un dispositif de prévention de ripage de pneu (50) configuré pour relier les extrémités d'un fil (52) disposé selon une direction longitudinale d'un dispositif de prévention de ripage de pneu (50) pour véhicules et positionné sur au moins l'une parmi une position interne ou une position externe d'un pneu (60) lorsqu'il est monté sur le pneu (60), le mécanisme de liaison (10, 10A-10C) comprenant :
un organe de couplage (12) incluant une extrémité, une partie base de couplage (14a) sur l'une extrémité, une autre extrémité, et un corps tubulaire (14) sur l'autre extrémité, une extrémité du fil (52) étant mise en prise avec la partie base de couplage (14a), le corps tubulaire (14) ayant une ouverture d'insertion (14b) ;
une partie tête de liaison (22) ayant une surface de projection, une autre extrémité du fil (52) étant reliée à la surface de projection, la surface de projection étant plus grande qu'un diamètre du fil (52) et capable d'être insérée dans l'ouverture d'insertion (14b) ; et
un moyen de serrage (16) disposé à l'intérieur du corps (14), le moyen de serrage (16) incluant des cliquets (16a2) configurés pour serrer une extrémité arrière de la partie tête de liaison (22) insérée par l'ouverture d'insertion (14b) ou une partie rétrécie ménagée sur la partie tête de liaison (22),
dans lequel le moyen de serrage (16) est formé par la jonction d'une paire de pièces de serrage (16a), les pièces de serrage (16a) incluant des parties de pressage (16a3), les cliquets (16a2), et des pivots (16a1) positionnés entre les parties de pressage (16a3) et les cliquets (16a2), la paire de pièces de serrage (16a) étant jointe au niveau des pivots (16a1) en tant qu'axe, et
dans lequel le corps (14) est muni de parties entaillées (14c2) sur une surface latérale correspondant à une position d'emplacement des parties de pressage (16a3) lorsque le moyen de serrage (16) est contenu dans le corps (14), les parties entaillées (14c2) étant en retrait dans une direction dans laquelle une paire des parties de pressage (16a3) se rapprochent.

2. Mécanisme de liaison (10, 10A-10C) pour un dispositif de prévention de ripage de pneu (50) selon la revendication 1, dans lequel le moyen de serrage (16) est muni d'un moyen de sollicitation (18) configuré pour générer une force de sollicitation dans une direction dans laquelle une paire des cliquets (16a2) se rapprochent.

3. Mécanisme de liaison (10, 10A-10C) pour un dispositif de prévention de ripage de pneu (50) selon la revendication 2, dans lequel le moyen de sollicitation (18) est disposé entre le pivot (16a1) et les cliquets (16a2).

4. Mécanisme de liaison (10, 10A-10C) pour un dispositif de prévention de ripage de pneu (50) selon la revendication 2, dans lequel le moyen de sollicitation (18) est disposé entre le pivot (16a1) et les parties de pressage (16a3).

5. Mécanisme de liaison (10, 10A-10C) pour un dispositif de prévention de ripage de pneu (50) selon l'une quelconque des revendications 1 à 4,
dans lequel l'une extrémité du fil (52) est munie d'une partie tête de mise en prise (24) ayant une surface de projection plus grande que le diamètre du fil (52), et
dans lequel le corps (14) accueille la partie tête de mise en prise (24) en son sein, et la partie base de couplage (14a) inclut une ouverture plus grande que le diamètre du fil (52) et plus petite que la surface de projection de la partie tête de mise en prise (24).

6. Mécanisme de liaison (10, 10A-10C) pour un dispositif de prévention de ripage de pneu (50) selon l'une quelconque des revendications 1 à 4, dans lequel la mise en prise de l'une extrémité du fil (52) avec le corps (14) est formée par une broche de support portant le moyen de serrage (16).

7. Mécanisme de liaison (10, 10A-10C) pour un dispositif de prévention de ripage de pneu (50) selon l'une quelconque des revendications 1 à 6, dans lequel le moyen de serrage (16) inclut, entre le pivot (16a1) et une extrémité avant du cliquet (16a2), une saillie empêchant l'extrémité avant de se déplacer vers l'intérieur jusque dans le corps (14).
